# EUROPÄISCHE PATENTSCHRIFT

(11) **EP 0 889 575 B1**
(45) Veröffentlichungstag und Bekanntmachung des Hinweises auf die Patenterteilung: **18.07.2007**
(21) Anmeldenummer: 98111510.8
(22) Anmeldetag: 23.06.1998
(51) Int. Cl.: H02K 27/22, H02K 3/16, H02K 3/20

(54) **Elektromotor**
Electric motor
Moteur électrique

(30) Priorität: 30.06.1997 DE 19727653; 05.08.1997 DE 19733827
(43) Veröffentlichungstag der Anmeldung: 07.01.1999
(73) Patentinhaber: Vorwerk & Co. Interholding GmbH, 42275 Wuppertal (DE)
(72) Erfinder: Mesli, Richard, 58332 Schwelm (DE); Pszola, Peter, 53123 Bonn (DE)
(74) Vertreter: Müller, Enno

(56) Entgegenhaltungen:
- DE-A- 1 488 422
- DE-A- 4 120 594
- DE-U- 8 230 318
- FR-A- 1 553 594
- PATENT ABSTRACTS OF JAPAN vol. 4, no. 175 (E-36) [657], 3. Dezember 1980 (1980-12-03) & JP 55 122466 A (HITACHI), 20. September 1980 (1980-09-20)
- PATENT ABSTRACTS OF JAPAN vol. 8, no. 185 (E-262) [1622], 24. August 1984 (1984-08-24) & JP 59 076135 A (FUJI DENKI SEIZO), 21. Oktober 1984 (1984-10-21)

## Beschreibung

Die Erfindung betrifft einen Elektromotor mit einem Rotor und einem Stator als Universalmotor für Haushaltsgeräte, Elektrowerkzeuge oder andere Elektro-Kleingeräte, wobei der Stator Polkerne aufweist, die an einem Statorjoch befestigt sind.

Universalmotoren für Haushaltsgeräte, Elektrowerkzeuge und ähnliche Konsumzwecke werden ausschließlich in Form unkompensierter Motoren ohne Wendepole und ohne Kompensationswicklungen angeboten. In solchen unkompensierten Universal- oder Reihenschlussmotoren kann die Kommutierung oder Stromwendung der Ankerströme, d.h. ein Stromrichtungswechsel in der Spule, welche gerade von der Kohlebürste kurzgeschlossen ist, nur sehr unvollkommen erfolgen, da das Ankerquerfeld stört. Bürstenfeuer ist die natürliche Folge. In größeren Industriemotoren wird die Kommutierung durch Wendepole und Kompensationswicklungen verbessert. Jedoch verbieten sich diese aufwendigen Hilfsmittel für kleine Universalmotoren der in Rede stehenden Art im Konsumbereich. Die Gründe hierfür sind insbesondere zu hohe Kosten, zu aufwendige Fertigungstechniken und eine Gewichtszunahme des Elektromotors. So ist die Lebensdauer kleiner Universalmotoren durch die Kohlestandzeit begrenzt. Eine Verbesserung der Kommutierung und somit eine Abschwächung von Bürstenfeuer, was wiederum eine Verringerung des Kohlenverschleißes zur Folge hat, kann durch die Wahl eines günstigen Blechschnittes des Stators und des Rotors erzielt werden. Weiter ist zur Verbesserung der Kommutierung bekannt, die Anker- und Feldwicklungszahl optimal anzupassen oder die Kollektorlamellenzahl zu erhöhen. Zudem ist eine Vergrößerung des Luftspaltes zwischen Rotor und Polschuh des Stators oder durch eine Steigerung der Präzision im Zuge der Bearbeitung zur Verbesserung der Kommutierung bekannt. Weiter kann auch durch Versuche eine geeignete Kohlebürste ermittelt werden. Motoren, welche mit einfachen Phasenanschnitt-Schaltungen betrieben werden, haben aufgrund des impulsartigen Durchschaltens der Betriebsspannung zusätzliche Kommutierungsprobleme, welche bisher allenfalls durch entsprechende Kohlebürsten gemildert werden können.

Aus der DE 42 20 594 A1 ist zur Lösung vorgenannter Problematik bekannt, eine Schweißnaht über die volle axiale Länge des Ständerjoches vorzusehen. Aus der DE 82 30 318 U1 ist eine Ausgestaltung bekannt, bei welcher an den Statorpolhörnern Kurzschlussringe ausgebildet sind, zur Dämpfung von Oberschwingungen. Eine ähnliche Lösung zur Dämpfung des Ankerquerfeldes zeigt die JP 55122466 A. In der FR 1553 594 ist eine Lösung beschrieben, bei der zur Dämpfung entsprechende Vorkehrungen in den Polen selbst getroffen sind.

Im Hinblick auf die vorbeschriebenen Nachteile wird eine technische Problematik der Erfindung darin gesehen, die Kommutierung bei Universalmotoren der in Rede stehenden Art in einfacher Weise zu verbessern.

Die Erfindung ist durch die Merkmale des Anspruchs 1 definiert. Bevorzugte Ausgestaltungen der Erfindung sind in den abhängigen Ansprüchen definiert.

Zufolge dieser Ausgestaltung wird in einfacher Weise eine Verbesserung der Kommutierung bei Universalmotoren erreicht, so dass die Kohlestandzeit erhöht ist. Untersuchungen haben gezeigt, dass die Spannungsspitzen, die bei der Kommutierung und bei Phasenanschnitt entstehen, schädlich für die Kohlestandzeit sind. Werden diese Spannungsspitzen durch eine Wicklung, welche im Magnetfluss des Motors liegt, gedämpft, so wird das Bürstenfeuer an den Kohlen erheblich gemindert, womit die Kohlestandzeit verlängert ist. Die Dämpfungswicklung muss transformatorisch einen Strom führen, der den Spannungs- und Stromspitzen in den kommutierten Spulen entgegenwirkt.

Hierbei handelt es sich jeweils um eine Kurzschlussspule, welche, jeweils ein Joch des Stators umfassend, angeordnet ist. Da die Dämpfungswicklung für eine gute Wirkung eine Mindestdämpfung erzielen muss, andererseits die dadurch bedingten Verluste nicht unnötig ansteigen sollen, ist die Wirkung über den Querschnitt der Wicklung angepasst, Gute Wirkungen ergeben sich bei 2 bis 3 % Verlustleistung - bezogen auf die Aufnahmeleistung des Motors. Die Dämpfungswicklung kann in Form einer oder mehrerer Kurzschlussspulen mit einer oder mehreren Windungen, die den Hauptfluss des Blechschnittes umfasst, gebildet werden. In einer weiteren alternativen Ausführungsform ist vorgesehen, dass als Verlängerung der Feldwicklungen zusätzliche Windungen ausgebildet sind, die elektrisch kurzgeschlossen sind. Auch hierdurch ist eine Kurzschlussspule zur Verbesserung der Kommutierung gebildet. Es kommt lediglich darauf an, im Flussverlauf den kommutierenden Spulen eine transformatorisch wirkende Dämpfung entgegenzusetzen. So ist weiter alternativ denkbar, dass die Statorjoche innen und außen beispielsweise durch eine Verschweißung quer zu ihrer Erstreckungsebene miteinander verbunden sind. Auch hierdurch sind Kurzschtussspulen zur Dämpfung von Spannungsspitzen gebildet.

Nachstehend ist die Erfindung anhand der beigefügten Zeichnung, welche jedoch lediglich mehrere Ausführungsbeispiele darstellt, näher erläutert. Es zeigt:
- Fig. 1: eine Schnittdarstellung eines Elektromotors;
- Fig. 2: eine Stirnansicht auf den Stator bei geschnittener Darstellung der Feldspulen, unter Fortlassung des Rotors, beiAnordnung zweier Dämpfungswicklun-gen auf den Statorjochen ;
- Fig. 3: den aus mehreren Statorblechen bestehenden Stator in perspektivischer Teil-Darstellung unter Fortlassung der Feldspulen,
eine weitere Ausführungsform darstellend.

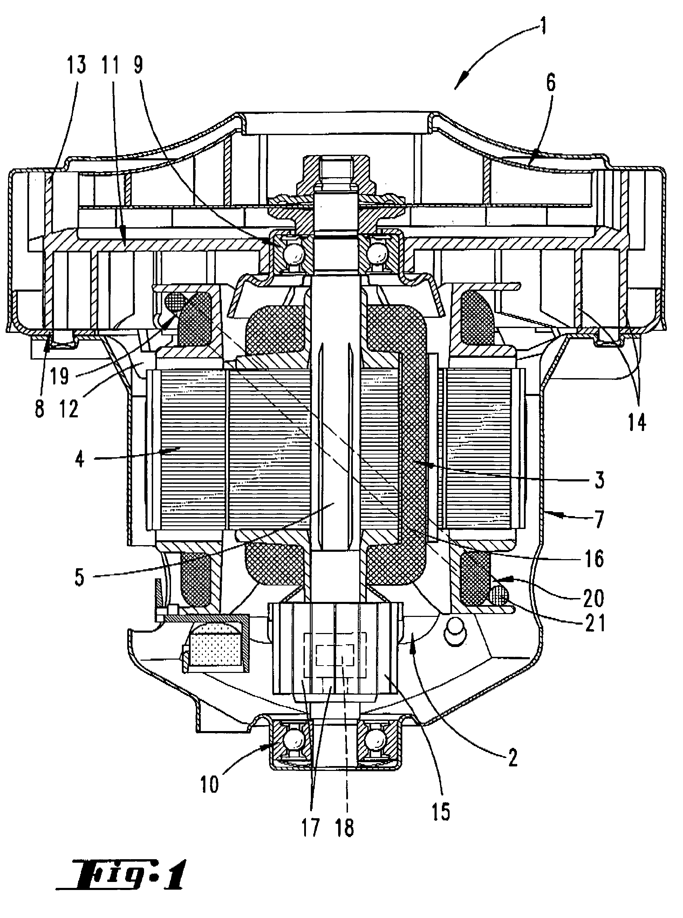

Dargestellt und beschrieben ist zunächst mit Bezug zu Fig. 1 eine Motor-Gebläse-Einheit 1, welche sich im wesentlichen aus einem schnellaufenden Elektromotor 2 gemäß den Merkmalen des Oberbegriffs des Anspruchs 1 einem Rotor 3 und einem Stator 4 und einem auf einer Rotorwelle 5 befestigten Gebläserad 6 zusammensetzt. Eine derartige Motor-Gebläse-Einheit ist bspw. aus der nicht vorveröffentlichten deutschen Patentanmeldung mit dem Aktenzeichen 196 06 146 bekannt.

Der Elektromotor 2 ist zum einen in einem Motorgehäuse 7 und zum anderen im Bereich eines Lageraufnahmeteiles 8 in Rotorwellen-Kugellagern 9 und 10 in den Endbereichen seiner Rotorwelle 5 gelagert. An dem dem Motorgehäuse 7 abgewandten Endbereich ist das Gebläserad 6 drehfest mit der Rotorwelle 5 verbunden.

Zwischen dem auf der Rotorwelle 5 befestigten Gebläserad 6 und dem Lageraufnahmeteil 8 ist an letzterem drehfest ein Diffusor 11 befestigt. Letzterer erstreckt sich quer zur Rotorwelle 5 und weist auf der dem Motorraum 12 abgewandten Seite Diffusor-Leitelemente 13 und auf der dem Motorraum 12 zugewandten Seite Rückführschaufeln 14 auf.

An den dem Rotorwellen-Kugellager 10 zugewandten Ende ist auf der Rotorwelle 5 ein Kollektor 15 angeordnet. Letzterer besteht in bekannter Weise aus radial angeordrieten, mit der Rotorwicklung 16 leitend verbundenen Kupferlamellen, die gegeneinander durch Glimmerzwischenlagen isoliert sind.

Die Rotorwicklung 16 bildet eine geschlossene Kette von in Reihe geschalteten Spulen. Jeder Kollektorsteg 17 ist an einer Fahne mit dem Ende und dem Anfang von zwei in der Wicklung aufeinanderfolgenden Spulen verlötet. Folglich entspricht die Anzahl der Kollektorstege 17 der Anzahl der Spulen in der Rotorwicklung.

Der Kollektor 15 dient zur Umkehrung der Stromrichtung in einer Windung der Rotorwicklung 16, während diese Windung im Verlauf der Drehung des Rotors 3 am Kollektor 15 durch eine in Fig. 1 schematisch dargestellte Kohlebürste 18 kurzgeschlossen ist. Die Dauer dieses Kurzschlusses ist die Kommutierungsdauer. Hiernach muß die Umkehrung des Stromes abgeschlossen sein. Propertional der Änderungsgeschwindigkeit des Stromes und der Selbst-Induktivität der kommutierenden Windung wird darin eine elektrische Spannung induziert, die der Stromänderung entgegenwirkt und die Kommutierung verzögert. Mit dem Ende der Kommutierungsdauer wird ein Abschluß der Kommutierung erzwungen. Hierbei entsteht bei nichtkompensierten Elektromotoren an der ablaufenden Bürstenkante der Kohlebürste 18 eine so hohe Stromdichte, daß Funkenbildung - sogenanntes Bürstenfeuer - auftreten kann als Zeichen für Spät- oder Unterkommutierung. Dies ist für die Kohlebürste 18 und den Kommutator, d. h. den Kollektor schädlich.

Bei größeren Industriemotoren wird die Kommutierung durch Wendepole und Kompensationswicklungen verbessert, womit in der kommutierenden Windung eine elektrische Spannung induziert wird, die der Selbstinduktionsspannung entgegenwirkt und die Kommutierung unterstützt. Diese Lösung ist jedoch für Universalmotoren der in Rede stehenden Art für bspw. Haushaltsgeräte, Elektrowerkzeuge oder andere Elektro-Kleingeräte aus insbesondere kosten- und fertigungstechnischen Gründen nicht anwendbar.

Erfindungsgemäß wird die Kommutierung eines in Rede stehenden Universalmotors dadurch verbessert, daß die Spannungsspitzen, welche bei der Kommutierung und bei Phasenanschnitt entstehen, gedämpft werden. So ist eine Dämpfungswicklung 19 vorgesehen, welche im Magnetfluß des Motors 2 liegt, so daß das Bürstenfeuer an den Kohlenbürsten 18 sofort erheblich gemindert und die Kohlestandzeit verlängert wird.

Die Dämpfungswicklung 19 führt transformatorisch einen Strom, der den Spannungs- und Stromspitzen in den kommutierenden Spulen entgegenwirkt.

Die in Fig. 1 mit 19 bezeichnete Wicklung ist keine Dämpfungswicklung gemäß Anspruch 1 und ist entsprechend nicht Gegenstand vorliegender Erfindung.

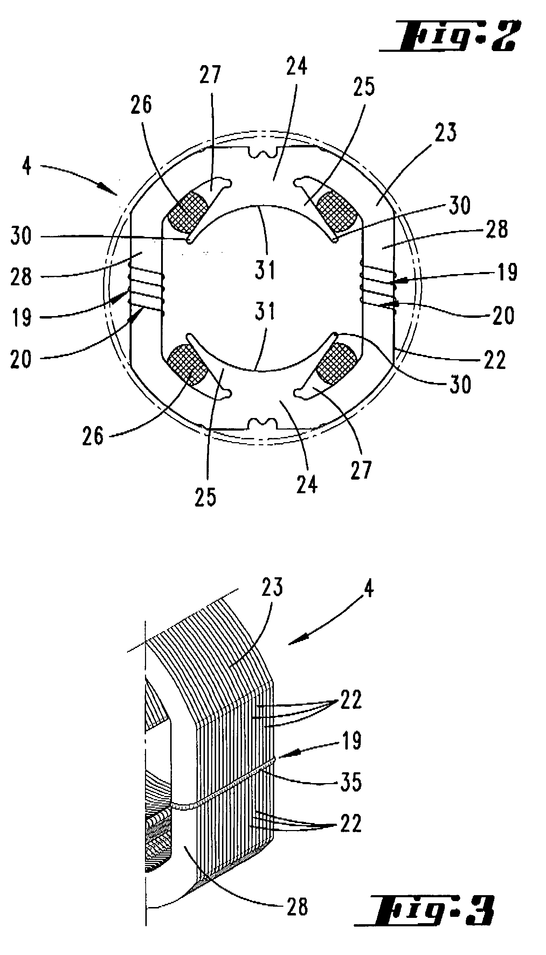

In den Fig. 2 und 3 ist jeweils lediglich der Stator 4 zur besseren Verdeutlichung der Anordnung der Dämfungswicklung dargestellt, wobei in Fig. 2 eine Stirnansicht auf den Stator 4 bzw. auf ein Statorblech 22 und in Fig. 3 eine perspektivische Darstellung des Stators 4 gewählt ist.

Der Stator 4 bildet ein ringförmiges Polgehäuse 23 aus, welches gebildet ist aus den hintereinander deckungsgleich angeordneten Statorblechen 22. An der Innenseite des Polgehäuses 23 sind zwei sich gegenüberliegende Polkerne 24 ausgebildet. Deren nach innen weisende freie Enden bilden jeweils einen Polschuh 25 aus.

Jeder Polkern 24 des Stators 4 trägt eine Feldwicklung 26.

In der Fig. 2 ist eine Ausgestaltung zur Dämpfung der Spannungsspitzen gezeigt, bei welcher jeweils eine, eine Kurzschlußspule 20 bildende Dämpfungswicklung 19 ein, die Polkerne 24 verbindendes Statorjoch 28 umschlingend angeordnet ist.

Weiter ist denkbar, jedoch zeichnerisch nicht dargestellt, eine Dämpfungswicklung durch Aufbringen von einigen zusätzlichen Windungen als Verlängerung der Feldwicklung 26, welche anschließend elektrisch kurzgeschlossen werden, zu bilden.

Das folgende Ausführungsbeiepiel zeigt eine Lösung, bei welcher die Dämpfungswicklung 21 durch Zusammensetzung von leitenden Bestandteilen des Motors erzeugt ist.

So ist in Fig. 3 eine Lösung dargestellt, bei welcher das Polgehäuse 23 als Teil der Dampfungswicklung 19 genutzt wird.

So besteht die Möglichkeit einer ringförmigen Verschweißung beider Statorjoche 28 sowohl innen als auch außen, womit diese quer zu ihrer Erstreckungsebene miteinander verbunden sind Hierdurch sind Kurzschlußspulen über die Schweißraupen 35 und den querverlaufenden Statorblechen 22 gebildet.

Durch die zuvor beschriebenen Ausgestaltungen ist in einfachster Weise eine Verbesserung der Kommutierung auch bei kleinen Universalmotoren erzielbar, was eine erhebliche Verlängerung der Kohlestandzeiten zur Folge hat.

## Patentansprüche

1. Elektromotor (2) mit einem Rotor (3) und einem Stator (4) als Universalmotor für Haushaltsgeräte, Elektrowerkzeuge oder andere Elektro-Kleingeräte, wobei der Stator (4) Polkerne (24) aufweist, die an einem Statorjoch (28) befestigt sind, eine Dämpfungswicklung (19) vorgesehen ist, die als Kurzschlusswicklung (20) ausgebildet ist, wobei **dadurch gekennzeichnet, dass** die Dämpfungswicklung (19) auf jedem Statorjoch (28) angeordnet ist.

2. Elektromotor nach Anspruch 1 **dadurch gekennzeichnet**, der Querschnitt eines Wicklungsleiters so gewählt ist, daß die Verlustleistung 10 % - bezogen auf die Aufnahmeleistung des Motors (2) - nicht übersteigt.

3. Elektromotor nach Anspruch 2 **dadurch gekennzeichnet, daß** die Verlustleistung 2 bis 3 % beträgt.

4. Elektromotor nach Anspruch 1, **dadurch gekennzeichnet, daß** als Verlängerung der Feldwicklungen (26) zusätzliche Windungen ausgebildet sind, die elektrisch kurzgeschlossen sind.

5. Elektromotor nach Anspruch 1, **dadurch gekennzeichnet, daß** das Polgehäuse (23) als Teil der Dämpfungswicklung (19) genutzt wird.

6. Elektromotor nach Anspruch 1, **dadurch gekennzeichnet, daß** die Statorjoche (28) innen und außen bspw. durch eine Verschweißung quer zu ihrer Erstreckungsebene miteinander verbunden sind.

## Claims

1. Electric motor (2) having a rotor (3) and a stator (4) as a universal motor for household appliances, electric tools or other small electric appliances, wherein the stator (4) comprises pole cores (24) which are attached to a stator yoke (28), wherein a damping winding (19) is provided which is designed as a short-circuit winding, **characterised in that** the damping winding (19) is mounted on each stator yoke (28).

2. Electric motor according to claim 1, **characterised in that** the cross-section of a winding conductor is selected so that the dissipated energy does not exceed 10%, referred to the consumption of the motor (2).

3. Electric motor according to claim 2, **characterised in that** the dissipated energy is 2 to 3%.

4. Electric motor according to claim 1, **characterised in that** additional windings which are electrically shortcircuited are designed as an extension of the field windings (26).

5. Electric motor according to claim 1, **characterised in that** the pole housing (23) is used as part of the damping winding (19).

6. Electric motor according to claim 1, **characterised in that** the stator yokes (28) are connected to each other on the inside and outside for example by welding transversely to the plane in which they extend.

## Revendications

1. Moteur électrique (2) avec un rotor (3) et un stator (4), en tant que moteur universel pour des appareils domestiques, des outils électriques ou d'autres petits outils électriques, le stator (4) présentant des noyaux polaires (24) fixés sur une culasse de stator (28), un enroulement d'amortissement (19) étant prévu, réalisé sous la forme d'enroulements de court-circuit (20), **caractérisé en ce que** l'enroulement d'amortissement (19) est disposé sur chaque culasse de stator.

2. Moteur électrique selon la revendication 1, **caractérisé en ce que** la section transversale d'un conducteur d'enroulement est choisie telle que la puissance de perte ne dépasse pas 10 % - par rapport à la puissance consommée du moteur (2).

3. Moteur électrique selon la revendication 2, **caractérisé en ce que** la puissance de perte est de 2 à 3 %.

4. Moteur électrique selon la revendication 1, **caractérisé en ce que**, à titre de prolongement des enroulements de champ (26), sont réalisés des enroulements supplémentaires mis électriquement en court-circuit.

5. Moteur électrique selon la revendication 1, **caractérisé en ce que** le boîtier de pole (23) est utilisé comme partie de l'enroulement d'amortissement (19).

6. Moteur électrique selon la revendication 1, **caractérisé en ce que** les culasses de stator (28) sont reliées ensemble intérieurement et extérieurement, par exemple par un soudage effectué transversalement à leur plan d'étendue.
